Europäisches Patentamt

**European Patent Office**

Office européen des brevets

(19)

(11) Publication number: **0 012 596**
**B1**

(12) **EUROPEAN PATENT SPECIFICATION**

(45) Date of publication of patent specification: **14.07.82**

(51) Int. Cl.³: **F 16 C 17/18**

(21) Application number: **79302851.5**

(22) Date of filing: **11.12.79**

(54) Journal bearing assemblies.

(30) Priority: **11.12.78 US 968646**

(43) Date of publication of application:
**25.06.80 Bulletin 80/13**

(45) Publication of the grant of the patent:
**14.07.82 Bulletin 82/28**

(84) Designated Contracting States:
**DE FR GB IT SE**

(56) References cited:
**DE - C - 602 287**
**DE - C - 713 099**
**GB - A - 1 174 660**
**US - A - 1 557 767**
**US - A - 1 562 644**
**US - A - 2 532 795**
**US - A - 3 212 829**
**US - A - 3 390 926**

(73) Proprietor: **THE GARRETT CORPORATION**
**9851-9951 Sepulveda Boulevard P.O. Box 92248**
**Los Angeles, California 90009 (US)**

(72) Inventor: **Bosco, Armand**
**343 East Embassy**
**Tempe, Arizona 85281 (US)**

(74) Representative: **Taylor, Duncan Alistair et al,**
**Messrs. Kilburn & Strode 30 John Street**
**London WC1N 2DD (GB)**

Courier Press, Leamington Spa, England.

Journal bearing assemblies

## Technical field of the invention

This invention relates to journal bearing assemblies, and is particularly concerned with bearing assemblies for supporting shafts rotating at high speed. Such bearing assemblies can, for example, be used in turbomachinery.

## The prior art

Plain journal bearings have been used in turbo-machines. However, one of the problems involved in bearings for such applications is that, at high shaft speeds, vibrations may occur, which can result in a high rate of wear, and destruction of the bearing, leading to failure of the turbomachine. These vibrations may result from inherent machine imbalances, attainment of natural resonance frequencies, or a combination of these factors.

It has also been proposed, for example in U.S. Patents Nos. 1,557,767 and 1,562,644, to construct a journal bearing with a bearing sleeve which is rotatable both relative to the shaft which is received within the sleeve and relative to the housing within which the sleeve is supported. In these prior proposals, stationary shoulders are provided to set a limit to the axial movements of the sleeve, but these shoulders apparently play no part in controlling the rotation of the sleeve. In operation, the sleeve presumably rotates at about half the shaft speed, so that a hydrodynamic bearing film is formed both between the shaft and the sleeve, and between the sleeve and the housing. As far as is known, these bearings are not intended or suitable for high speed operation.

It has also been proposed, in U.S. Patent No. 2,532,795, to use a plain bearing having two half-sleeves which have sufficient clearance both relative to the shaft and relative to the surrounding housing to permit the formation of lubricant films, the half sleeves being held against rotation relative to the housing, while still being able to float in other senses.

The technique of locking the sleeve against rotation inherently subjects the bearing to uneven axial and/or rotational wear, and nonuniform, exposure to elevated temperatures. Moreover, the locking devices themselves may vibrate or fail, for example when their resonant frequencies are reached to set up corresponding vibrations in the bearings. All of these factors may contribute to shortened bearing life when such bearings are used in high speed rotating machinery.

It is also noted here that DE-C-602 287 proposes a journal bearing for an oscillating part, e.g. a connecting rod, wherein a rotatable bearing sleeve is acted upon by a spring so as to restrict it to rotation in one direction. The sleeve thus rotates stepwise around the bearing pin. This document does not relate to bearings for rotatable shafts and does not suggest that a restriction of the rotation of a bearing sleeve in such a bearing could in any way be advantageous.

## Summary of the invention

According to the present invention, a journal bearing assembly for supporting a rotating shaft, comprising a sleeve within which the shaft is rotatably borne, and which is itself rotatably supported in a passage in a housing, axial movements of the sleeve in at least one direction being controlled by abutment of the sleeve against a stationary shoulder, is characterised by a resilient member which urges an annular retainer into frictional contact with the end of the sleeve remote from the stationary shoulder, to control the rotation of the sleeve within the housing, and also to control the axial position of the sleeve. The frictional contact between the sleeve and the annular retainer, and possibly also between the sleeve and the stationary shoulder, controls the rotation of the sleeve, without actually preventing rotation of the sleeve; in operation, the sleeve rotates at a speed much lower than the speed of the shaft, but sufficient to distribute bearing wear uniformly and to expose the sleeve uniformly to any elevated temperature.

In a preferred arrangement, the bearing assembly includes a stop arrangement limiting axial movements of the annular retainer against the action of the resilient means, so that the sleeve can make only small axial movements relative to the housing. A stationary component of the stop arrangement may be adjustable in position to adjust the possible axial movement of the sleeve relative to the housing.

Other preferred features of the bearing assembly according to the invention are stated in the dependent claims.

## Brief description of the drawings

The accompanying drawings illustrate one embodiment of the invention. In such drawings:

Figure 1 is a longitudinal section through a bearing assembly embodying this invention;

Figure 2 is a section taken on the line 2—2 of Figure 1; and

Figure 3 is a section through part of the bearing assembly, taken on the line 3—3 of Figure 1.

## Detailed description of the preferred embodiment

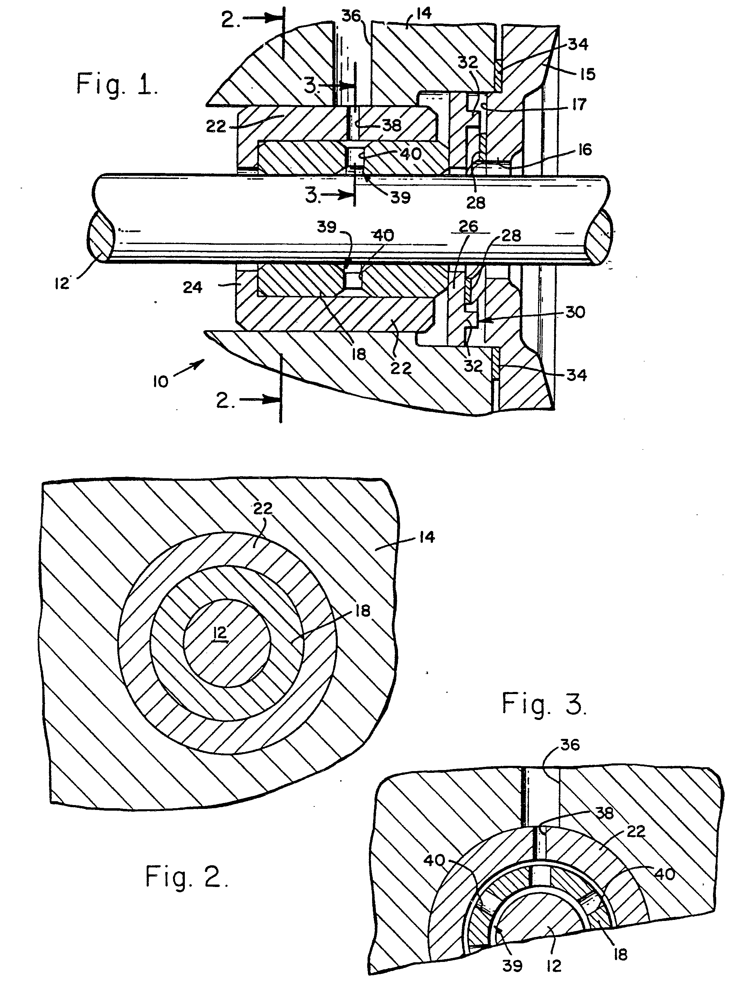

The bearing assembly embodying the invention is generally shown at 10 in Figure 1, and serves to support a shaft 12 within a housing 14, while allowing high speed rotation of the shaft 12. The bearing assembly 10 comprises a hollow, generally cylindrical bearing sleeve 18 formed from a material such as bronze. The sleeve 18 has an inner diameter such that it fits fairly closely over the shaft 12, so that the shaft 12 is rotatably supported by the sleeve 18. The outer diameter of the sleeve 18 is such that it fits fairly closely within a cylindrical carrier 22, so that the sleeve 18 is rotatable within the carrier 22; the carrier 22 is press-fitted into the housing 14, so that movement of the carrier within the housing 14 is prevented. As shown in Figure 1, the carrier 22 also includes at one end a radially inwardly projecting thrust shoulder 24 against which one end of the bearing sleeve 18 engages to limit axial motion of the sleeve. Moreover, the carrier 22 has a radial passage 38 aligned with a radial port 36 in the housing 14 for the admission of a lubricating fluid such as oil to the bearing assembly 10. As Figures 1 and 3 show, the radial thickness of the sleeve 18 in the vicinity of the lubricant passage 38 is reduced, as at 39, and the sleeve includes six radial openings 40, so as to allow ample lubricant flow to both the inner diameter and the outer diameter of the bearing sleeve 18.

The other end of the sleeve bearing 18 extends out of the end of the carrier 22, and bears axially against a washer-like annular retainer 26 received within the housing 14; the outer diameter of the retainer 26 contacts the housing 14, while its inner diameter has a fairly generous clearance around the shaft 12. The retainer 26 is axially biased into engagement with the bearing sleeve 18 by an undulating washer spring 28 interposed between the retainer 26 and a housing closure plate 15 which is fixed to the main part 14 of the housing. The plate 15 has a face 17 against which the spring 28 bears, and a bore 16 through which the shaft 12 projects with a generous clearance. Although the drawings show no seals, it will be understood that various types of seal, such as O-rings or piston-type rings, may be provided around the shaft 12.

The spring 28 applies a controlled spring force axially to the sleeve 18 to load the sleeve 18 symmetrically and relatively lightly against axial motion. If an axial loading acting towards the right (as seen in Figure 1) should be applied to the sleeve 18, which loading exceeds the controlled spring force, a limited degree of axial floating of the bearing sleeve 18 is permitted against the effect of the axial spring force. However, the magnitude of this axial floating is limited by the spacing (shown at 30) between an annular rib 32 on the retainer 26 and the face 17 of the closure plate 15. The precise magnitude of this axial gap 30 can be adjusted on assembly by means of shims 34 interposed between the housing 14 and the closure plate 15, to a value which limits potential bearing misalignment from axial play to a safe value, as well as limiting any adverse effects due to spring resonance.

The friction produced by the force from the washer spring 28 urging the retainer 26 into frictional contact with the bearing sleeve 18 also controls the rotational freedom or floating of the bearing sleeve 18. More specifically, the spring force is applied to the sleeve 18 via the retainer 26 symmetrically about the circumference of the sleeve. The magnitude of the spring force is chosen to limit the rotational floating of the bearing sleeve to a relatively low value, compared with the rotational speed of the shaft 12. In this manner, excessive bearing vibrations are prevented and the sleeve is prevented from rotating at a rate sufficient to reach its own natural resonance frequency. Moreover, radial excursions of the shaft 12 transmitted to the bearing sleeve 18 are damped by the spring force to protect the bearing further against detrimental vibrations. At the same time, however, the bearing sleeve rotates sufficiently that it is subjected to uniform circumferential wear and uniform exposure over its operating life to elevated temperatures.

In one operating example of a bearing assembly of the type described above, a sleeve 18 was received within a carrier 22 and over a 41 mm diameter shaft 12 with a 0.2 mm radial clearance between the sleeve and the carrier and a 0.13 mm radial clearance between the sleeve and the shaft. At high speed operation of the shaft, say at about 60,000 revolutions per minute, sufficient lubricating oil was supplied via the oil ports 36, 38 and 40 to set up a hydrodynamic oil film between the sleeve 18 and the carrier 22, and between the sleeve and the shaft 12. The washer spring 28 biased the retainer 26 axially into frictional contact with the sleeve 18 to slow down rotation of the sleeve relative to the carrier 22 to a relatively slow rotational speed, say about 200 to 300 revolutions per minute. Moreover, the spring-biased retainer 26 biased the sleeve 18 against axial play, with a limited amount of play being permitted as determined by the gap 30 having a magnitude of about 0.05 mm. In this manner, the sleeve bearing rotated sufficiently for uniform wear and temperature exposure, and shifted axially to accommodate axial loading and imbalances in the system.

**Claims**

1. A journal bearing assembly for supporting a rotating shaft (12), comprising a sleeve (18) within which the shaft is rotatably borne, and which is itself rotatably supported in a passage in a housing (14), axial movements of the sleeve (18) in at least one direction being controlled by abutment of the sleeve against a stationary shoulder (24), characterised by a resilient member (28) which urges an annular retainer (26) into frictional contact with the end of the sleeve (18) remote from the stationary shoulder (24), to control the rotation of the sleeve (18) within the housing (22), and also to control the axial position of the sleeve (18).

2. A bearing assembly as claimed in Claim 1, which includes a stop arrangement (17, 32) limiting axial movements of the annular retainer (26) against the action of the resilient means, so that the sleeve (18) can make only small axial movements relative to the housing (22).

3. A bearing assembly as claimed in Claim 2, in which a stationary component (17) of the stop arrangement is adjustable in position (by means of 34) to adjust the possible axial movement of the sleeve (18) relative to the housing (22).

4. A bearing assembly as claimed in Claim 2 or Claim 3 in which the spring acts between, on the one hand, a stationary abutment (17) connected to the housing (22), and on the other hand the annular retainer (26), at least one of which components (17, 26) bears a projection (32) which can abut against the other of the components (26, 17) to form the stop arrangement.

5. A bearing assembly as claimed in any of the preceding claims, in which the resilient member (28) exerts on the annular retainer (26) forces which are distributed symmetrically around the bearing axis.

6. A bearing assembly as claimed in Claim 5, in which the resilient member (28) is a wave washer spring.

7. A bearing assembly as claimed in any of the preceding claims, in which the end of the sleeve (18) remote from the stationary shoulder (24) projects beyond the surrounding portion (22) of the housing for engagement by the annular retainer (26).

## Patentansprüche

1. Achslageranordnung zur Abstützung einer rotierenden Welle (12) mit einer Buchse (18), in der die Welle drehbar aufgenommen ist und die selbst drehbar in einer Bohrung in einem Gehäuse (14) abgestützt ist, wobei axiale Bewegungen der Buchse (18) in wenigstens einer Richtung durch Anlage der Buchse gegen eine stationäre Schulter (24) gesteuert sind, gekennzeichnet durch ein elastisch nachgiebiges Bauteil (28), das einen Spannring (26) in Reibkontakt mit dem entfernt von der stationären Schulter (24) liegenden Ende der Buchse (18) drückt, um die Drehung der Buchse (18) innerhalb des Gehäuses (22) und ferner die axiale Position der Buchse (18) zu steuern.

2. Achslageranordnung nach Anspruch 1, gekennzeichnet durch eine Anschlaganordnung (17, 32) die axiale Bewegungen des Spannringes (26) entgegen der Wirkung der Vorrichtung (28) begrenzt, so daß die Buchse (18) nur geringe axiale Bewegungen in bezug auf das Gehäuse (22) ausführen kann.

3. Achslageranordnung nach Anspruch 2, dadurch gekennzeichnet, daß ein stationäres Bauteil (17) der Anschlaganordnung in der Position (mit Hilfe von 34) einstellbar ist, um die mögliche axiale Bewegung der Buchse (18) relativ zum Gehäuse (22) einzustellen.

4. Achslageranordnung nach Anspruch 2 oder 3, dadurch gekennzeichnet, daß die Feder einerseits zwischen einem stationären Anschlag (17), der mit dem Gehäuse (22) verbunden ist, und andererseits dem Spannring (26) wirksam ist, wobei wenigstens eines der Bauteile (17, 26) einen Ansatz (32) aufweist, der gegen das andere Bauteil (26, 17) in Anlage kommen kann, um die Anschlaganordnung auszubilden.

5. Achslageranordnung nach einem der Ansprüche 1 bis 4, dadurch gekennzeichnet, daß das elastisch nachgiebige Bauteil (28) auf den Spannring (26) Kräfte ausübt, die symmetrisch um die Lagerachse verteilt sind.

6. Achslageranordnung nach Anspruch 5, dadurch gekennzeichnet, daß das elastisch nachgiebige Bauteil (26) eine Scheibenfeder ist.

7. Achslageranordnung nach einem der Ansprüche 1 bis 6, dadurch gekennzeichnet, daß das Ende der Buchse (18), das von der stationären Schulter (24) entfernt angeordnet ist, über den umgebenden Teil (22) des Gehäuses zum Eingriff mit der Scheibenfeder (26) vorsteht.

## Revendications

1. Palier lisse pour maintenir un arbre tournant (12), comportant une bague (18) dans laquelle l'arbre est monté rotativement et qui est elle-même montée rotativement dans un passage d'un boîtier (14); les mouvements axiaux de la bague (18) étant, au moins dans un sens, contrôlés par un effet d'appui de la bague contre un épaulement fixe (24); caractérisé en ce qu'il comporte un organe élastique (28), qui applique une rondelle de retenue (26) avec friction contre l'extrémité de la bague (18) opposée à l'épaulement fixe (24), afin de freiner la rotation de la bague (18) dans le boîtier (22), et de contrôler la position axiale de la bague (18).

2. Palier selon la revendication 1, caractérisé en ce qu'il comporte un système de butée (17, 32), qui limite les mouvements axiaux de la rondelle de retenue (26) sollicitée par l'organe élastique, de manière à permettre seulement des mouvements axiaux de faible amplitude de la bague (18) par rapport au boîtier (22).

3. Palier selon la revendication 2, caractérisé en ce qu'un organe fixe (17) du système de butée est associé à des moyens de réglage (34) permettant de faire varier la position de cet organe (17), pour régler le mouvement axial possible de la bague (18) par rapport au boîtier (22).

4. Palier selon l'une des revendications 2 ou 3, caractérisé en ce que l'organe élastique (28) agit entre, d'une part une butée fixe (17) solidaire du boîtier (22), et d'autre part la rondelle de retenue (26); l'un au moins des organes (17, 26) présentant une saillie (32), adaptée à venir porter contre l'autre organe (26, 17), pour réaliser le système de butée.

5. Palier selon l'une des revendications 1 à 4, caractérisé en ce que l'organe élastique (28) exerce sur la rondelle de retenue (26) des efforts qui sont symétriquement répartis autour de l'axe du palier.

6. Palier selon la revendication 5, caractérisé en ce que l'organe élastique (28) est constitué par une rondelle élastique ondulée.

7. Palier selon l'une des revendications 1 à 6, caractérisé en ce que l'extrémité de la bague (18) opposée à l'épaulement fixe (24) déborde au-delà de la partie (22) du boîtier qui entoure cette extrémité, pour coopérer avec la rondelle de retenue (26).

Fig. 1.

Fig. 2.

Fig. 3.